# EUROPÄISCHE PATENTSCHRIFT

(11) **EP 1 297 596 B1**
(45) Veröffentlichungstag und Bekanntmachung des Hinweises auf die Patenterteilung: **26.12.2007**
(21) Anmeldenummer: 01951513.9
(22) Anmeldetag: 23.05.2001
(51) Int. Cl.: H02G 3/06, F16L 37/00

(54) **ANSCHLUSSARMATUR MIT ELASTISCHEM RING ALS ANSCHLAG**
CONNECTING FITTING WITH AN ELASTIC RING AS A STOP
GARNITURE DE RACCORDEMENT POURVUE D'UNE BAGUE ELASTIQUE COMME BUTEE

(30) Priorität: 01.07.2000 DE 10032010
(43) Veröffentlichungstag der Anmeldung: 02.04.2003
(73) Patentinhaber: Anton Hummel Verwaltungs GmbH, 79183 Waldkirch (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); GERBER, Philipp, 79261 Gutach-Bleibach (DE)
(74) Vertreter: Patent- und Rechtsanwaltssozietät Maucher, Börjes & Kollegen
(86) Internationale Anmeldenummer: PCT/EP2001/005909
(87) Internationale Veröffentlichungsnummer: WO 2002/003520

(56) Entgegenhaltungen:
- EP-A- 0 790 453
- DE-A- 4 325 420
- DE-C- 19 804 719

## Beschreibung

Die Erfindung betrifft eine Anschlußarmatur zum Befestigen von länglichen Körpern, beispielsweise von Schläuchen, Wellschläuchen, Rohren, Kabeln oder dergleichen, an einer Öffnung, insbesondere an einem Durchbruch oder einer Lochung zum Beispiel in einer Wandung eines Gehäuses oder dergleichen, wobei die Anschlußarmatur einen in Einsteckrichtung axial vorstehenden Befestigungsvorsprung aufweist, der durch im wesentlichen in axialer Richtung verlaufender Schlitze in Haltezungen aufgeteilt ist, an deren Außenseite zumindest in Gebrauchsstellung etwa radial nach außen vorstehende Haltevorsprünge angeordnet sind, wobei die Haltezungen beim Einschieben des Befestigungsvorsprunges in die Öffnung, den Durchbruch oder dergleichen Lochung hinter dem Rand der Öffnung in die Halteposition gelangen, in welcher sie diesen Rand zumindest teilweise hintergreifen, wobei mit Abstand zu den Haltevorsprüngen wenigstens ein Anschlag angeordnet ist, der in Gebrauchsstellung an dem dem hintergriffenen Rand der Öffnung gegenüberliegenden Öffnungsrand anliegt und der Anschlag ein elastischer oder gummielastischer Ring ist, der auf einer sich von innen nach außen schräg von der Öffnung weg erweiternden Fläche der Anschlußarmatur abgestützt und unter elastischer Vergrößerung seines Durchmessers gegen seine elastische Rückstellkraft auf dieser schrägen Fläche in axialer Richtung bewegbar oder verschiebbar ist.

Eine derartige Anschlußarmatur ist aus der deutschen Patentschrift DE 198 04 719 C1 bekannt und hat sich bewährt, weil sie an Öffnungen, Lochungen oder Durchbrüchen von Gehäusewandungen mit unterschied-lichen Wandstärken anbringbar ist, wobei die Elastizität des den Anschlag bildenden Ringes ausgenutzt wird, um unterschiedliche Wandstärken auszugleichen, da sich dieser Ring auf einer von der Öffnung weg erweiternden Fläche der Anschlußarmatur abstützt und unter elastischer Vergrößerung seines Durchmessers je nach Wanddicke mehr oder weniger weit verschoben werden kann.

Dabei ist allerdings die größtmögliche Wandstärke auf den Abstand zwischen dem Anfang der schrägen Fläche und den die Wandöffnung hintergreifenden Haltevorsprüngen beschränkt. Außerdem muß zur Berücksichtigung relativ dünner Wandstärken ein elastischer Ring mit relativ großem Querschnitt benutzt werden, was bei der Anwendung an relativ dicken Wandstärken größere Verformungskräfte erforderlich macht. Darüber hinaus bedeutet ein elastischer Ring mit größerem Querschnitt auch höhere Kosten.

Es besteht deshalb die Aufgabe, eine Anschlußarmatur der eingangs definierten Art zu schaffen, mit welcher in ihrem jeweiligen Querschnitt kleinere Ringe als Anschläge verwendbar und dennoch auch größere Wandstärken erfaßbar sind.

Zur Lösung dieser scheinbar widersprüchlichen Aufgabe ist vorgesehen, daß die Anschlußarmatur benachbart zu dem die schräge Fläche aufweisenden Bereich und/oder im Bereich des größten Durchmessers der schrägen Fläche geteilt und der die schräge Fläche aufweisende separate Teil an der Anschlußarmatur in axialer Richtung verstellbar und dadurch der axiale Abstand der schrägen Fläche von den Haltevorsprüngen veränderbar oder vorwählbar ist.

Dadurch ist es möglich, eine zu erfassende Wandstärke im Bereich eines Durchbruches eines Gehäuses von vornherein so zu berücksichtigen, daß ein elastischer Ring mit relativ geringem Querschnitt ausreicht, um die endgültige Festlegung zu bewirken. Entsprechend preiswert kann dieser elastische Ring, beispielsweise ein O-Ring, sein. Außerdem ergeben sich dann vor allem auch bei großen Wandstärken, die durch die Verstellung des die Schrägflächen aufweisenden Teiles entsprechend berücksichtigt werden können, keine großen Verformungskräfte an dem elastischen Anschlag-Ring.

Vor allem können durch die Möglichkeit, den die schräge Fläche aufweisenden Teil gegenüber der Anschlußarmatur axial zu verstellen, auch noch größere Wandstärken problemlos erfaßt werden.

Besonders zweckmäßig ist es, wenn das die schräge Fläche aufweisende separate Teil mittels eines Gewindes durch Verdrehen in axialer Richtung verstellbar und insbesondere festlegbar ist. Somit kann eine stufenlose Anpassung an unterschiedliche Wandstärken erfolgen. Zum Festlegen kann dabei in der Mehrzahl der Fälle die Selbsthemmung des Gewindes insbesondere im Zusammenwirken mit dem elastischen Ring oder O-Ring ausreichen.

Das die schräge Fläche aufweisende Teil kann ein Ring sein, der zumindest über einen Teil seiner axialen Ausdehnung ein Innengewinde hat, welches auf ein Außengewinde an der Anschlußarmatur paßt. Somit ist eine einfache axiale Verstellung durch Verdrehen dieses Ringes möglich, der dabei dann auch den elastischen Ring entsprechend mitschleppen kann.

Das die schräge Fläche aufweisende Teil kann einen der schrägen Fläche in axialer Richtung benachbarten, in Gebrauchsstellung von den Haltevorsprüngen weiter als die schräge Fläche entfernt angeordneten Ringbereich haben, der als Greifring zum Verdrehen ausgebildet und/oder mit Verformungen zum Erfassen von Hand oder gegebenenfalls mittels eines Werkzeuges versehen ist. Es ist also für die leichte Bedienbarkeit besonders günstig, wenn der die schräge Fläche aufweisende Bereich mit etwas Abstand zum Ende der schrägen Fläche, also dem Bereich mit dem größten Durchmesser gegenüber der Anschlußarmatur abgeteilt ist, so daß gleichzeitig ein Greifring gebildet wird, der ein bequemes Erfassen und Verschrauben des die schräge Fläche aufweisenden Teiles oder Ringes erlaubt.

Eine abgewandelte Ausführungsform kann darin bestehen, daß der die schräge Fläche aufweisende Teil oder Ring stufenweise axial verstellbar und mittels einer lösbaren Verriegelung, zum Beispiel mit wenigstens einem in Querlochungen des Teiles oder Ringes und der Anschlußarmatur passenden Querstiftes festlegbar ist. Da der als Anschlag dienende elastische Ring Wandstärkenunterschiede an der Lochung des Gehäuses ausgleichen kann, können sprunghafte oder stufenweise Verstellungen und Festlegungen des die schräge Fläche aufweisenden separaten Teiles ausreichen, um große Wandstärken-unterschiede problemlos ausgleichen zu können. Es kann dann die Anbringung von Gewinden vermieden werden.

Dabei kann der Querstift als Schraube ausgebildet sein, wodurch er selbst in seiner Sperrposition entsprechend gut gesichert ist. Die Zahl der Querlochungen hängt dabei davon ab, welche Dickenunterschiede der Wandstärke im Bereich eines Gehäusedurchbruches insgesamt überbrückt werden können sollen.

Der Vollständigkeit halber sei noch erwähnt, daß an der Anschlußarmatur ein weiteres Gewinde für eine Schraubhülse vorgesehen sein kann, womit eine innerhalb der Anschlußarmatur angeordnete Spannzange mit Klemmfingern zum Festlegen beispielsweise eines Kabels in an sich bekannter Weise betätigt werden kann.

Nachstehend sind Ausführungsbeispiele der Erfindung anhand der Zeichnung näher beschrieben. Es zeigt in zum Teil schematisierter Darstellung:
- Fig. 1: eine teilweise im Längsschnitt gehaltene Seitenansicht einer erfindungsgemäßen Anschlußarmatur, die im Bereich einer schrägen Fläche insbesondere durch ein Gewinde derart unterteilt ist, daß das die schräge Fläche aufweisende Teil gegenüber der Anschlußarmatur durch Verdrehen axial verstellbar ist, vor der Montage,
- Fig. 2: eine der Fig.1 entsprechende Darstellung nach der Montage, wobei die Anschlußarmatur an einer relativ dünnen Wandung befestigt und demgemäß das die schräge Fläche aufweisende Teil mit dem den Anschlag bildenden elastischen Ring näher zu den Haltevorsprüngen hin verstellt ist,
- Fig. 3: eine der Fig.2 entsprechende Darstellung, bei welcher eine Wandung mit größerer Stärke vorgesehen und demgemäß das Teil mit der schrägen Fläche in axialer Richtung weiter von den Haltevorsprüngen weg verstellt ist,
- Fig. 4: eine der Fig.2 entsprechende Darstellung, wobei der die schräge Fläche aufweisende Teil oder Ring stufenweise verstellbar und mittels Querstiften in der jeweiligen Lage festlegbar ist und eine relativ dünne Wandung erfaßt wird, sowie
- Fig. 5: eine der Fig.4 entsprechende Ausführungsform, bei welcher die Anschlußarmatur an einer relativ dicken Wandung angreift und das die schräge Fläche aufweisende Teil mittels Querstift und Lochungen in einer von den Haltevorsprüngen entfernteren Position festgelegt ist.

In den nachfolgend beschriebenen Ausführungsbeispielen erhalten hinsichtlich ihrer Funktion übereinstimmende Teile auch bei abgewandelter Formgebung oder Ausführung übereinstimmende Bezugszahlen.

Eine im ganzen mit 1 bezeichnete Anschlußarmatur dient zum Befestigen von länglichen Körpern, im Ausführungsbeispiel zum Befestigen eines im wesentlichen außenseitig glatten Körpers, beispielsweise eines Kabels, an einer Öffnung 3, zum Beispiel an einem Durchbruch oder einer Lochung in einer Wandung 4, beispielsweise eines Gehäuses oder dergleichen. Der längliche Körper oder das Kabel sind der besseren Übersicht wegen nicht dargestellt.

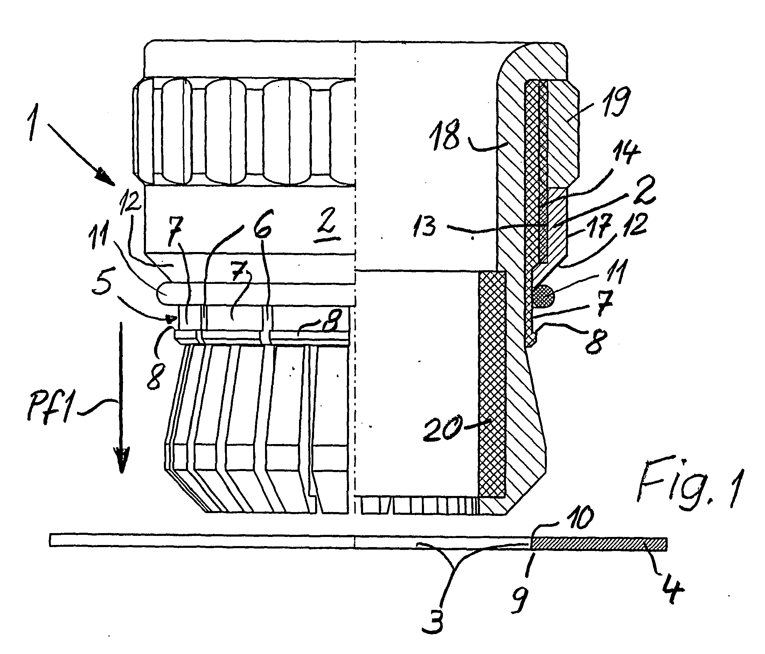

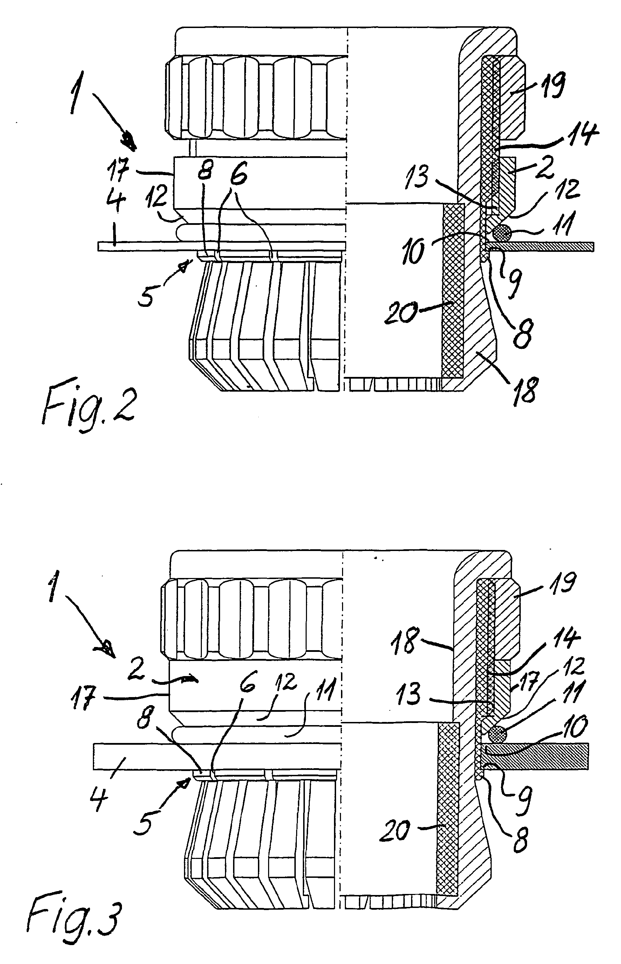

Die Anschlußarmatur 1 weist dabei einen in der durch den Pfeil PF1 in Fig.1 angedeuteten Einsteckrichtung axial vorstehenden Befestigungsvorsprung 5 auf, der durch im wesentlichen in axialer Richtung verlaufende Schlitze 6 in Haltezungen 7 aufgeteilt ist, an deren Außenseite radial nach außen vorstehende Haltevorsprünge 8 angeordnet sind, die beim Einschieben des Befestigungsvorsprunges 5 und damit der Haltezunge 7 in die Öffnung 3 gemäß Fig.2 bis 5 hinter den Rand 9 in ihre Halteposition gelangen, in welcher die Haltevorsprünge 8 diesen Rand 9 hintergreifen. Sie haben dabei einen etwa sägezahnartigen Querschnitt, das heißt, entgegen der Einsteckrichtung nimmt ihre Höhe allmählich bis zu ihrer größten radialen Abmessung zu, um dann relativ steil beziehungsweise in einer radialen Ebene liegend abzufallen, wobei dieser steile Abfall mit dem Lochungsrand 9 in Gebrauchsstellung in Wirkverbindung ist.

Mit Abstand zu den Haltevorsprüngen 8 und deren steiler Anschlagfläche ist ein nachfolgend näher beschriebener Anschlag angeordnet, der in Gebrauchsstellung an dem dem hintergriffenen Rand 9 der Öffnung 3 gegenüberliegenden Öffnungsrand 10 anliegt, wie es die Figuren 2 bis 5 zeigen.

Der schon erwähnte Anschlag ist dabei gemäß den Figuren 2 bis 5, soweit es die unmittelbare Anlage an dem Öffnungsrand 10 betrifft, ein gummielastischer Ring 11, bevorzugt ein O-Ring, der auf einer sich von innen nach außen schräg von der Öffnung 3 weg erweiternden Fläche 12 abstützt. Der Anschlag wird also insgesamt von dieser schrägen Fläche 12 und dem daran anliegenden elastischen Ring 11 gebildet.

Gegenüber einer Ausgangsstellung gemäß Fig.1 ist aufgrund dieser Anordnung der Ring 11 unter eventueller Vergrößerung seines Durchmessers gegen eine Rückstellkraft auf dieser schrägen Fläche 12 in axialer Richtung verschiebbar und kann dabei etwas aufgeweitet, gleichzeitig aber auch etwas komprimiert werden.

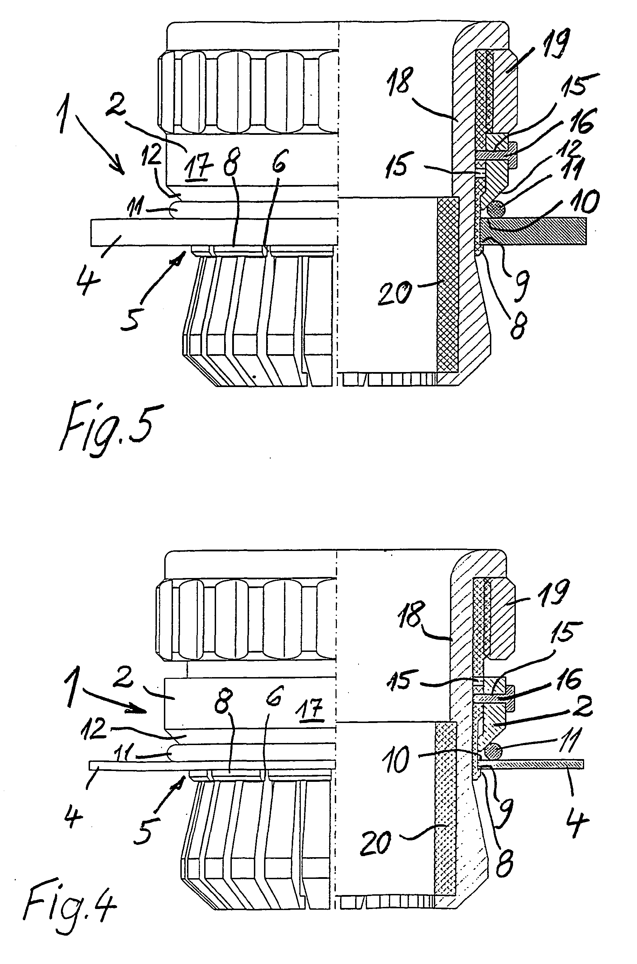

Gegenüber den Darstellungen gemäß den Figuren 2 und 4 wird eine solche axiale stärkere Verstellung des das Widerlager bildenden Ringes 11 dann erfolgen, wenn die Dicke der Wandung 4 größer als in den genannten Figuren ist, so daß aufgrund der Elastizität des Ringes 11 und der schrägen Fläche 12, deren kleinster Durchmesser etwas in den Ring 11 eingreifen kann, eine Anpassung an unterschiedliche Dicken oder Stärken der Wandung 4 selbsttätig möglich ist. Ist die Wandung 4 etwas dicker, muß die Anschlußarmatur allerdings mit größerer Kraft in die Öffnung 3 eingesteckt werden, bis die Haltevorsprünge 8 hinter den zu hintergreifenden Rand 9 gelangen und dort verrastet werden, wobei dann der Ring 11 entsprechend stärker verformt und aufgrund der schrägen Fläche 12 unter Umständen aufgeweitet wird, wenn er nämlich relativ zu dieser schrägen Fläche 12 axial verschoben wird.

Damit erheblich größere Unterschiede der Dicke der Wandung 4 ermöglicht werden, wie es der Vergleich der Fig.2 mit Fig.3 einerseits und der Vergleich der Fig.4 mit Fig.5 andererseits zeigt, ist die Anschlußarmatur 1 benachbart zu dem die schräge Fläche 12 aufweisenden Bereich geteilt und der die schräge Fläche 12 aufweisende, separate Teil 2 ist an der Anschlußarmatur 1 in axialer Richtung verstellbar, wie es der Vergleich jeweils der Figuren 2 und 3 beziehungsweise 4 und 5 deutlich zeigt. Somit kann der axiale Abstand der schrägen Fläche 12 oder ihres Anfanges von den Haltevorsprüngen 8 verändert und vorgewählt werden, das heißt es kann von vornherein eine grobe Anpassung an die jeweilige Wandstärke vorgenommen werden, so daß der elastische Anschlag-Ring 11 dann nur noch einer geringen Verformung unterworfen werden muß, um die genaue Anpassung an die jeweilige Wandstärke zu bewirken. Somit kann ein im Querschnitt relativ kleiner Ring 11 für diese Anpassung ausreichen und die Kräfte zu seiner Verformung bleiben auch dann gering, wenn eine relativ große Wandstärke an der Öffnung 3 vorhanden ist. In Fig.2 und 3 einerseits und in Fig. 4 und 5 andererseits erkennt man deutlich, daß der Ring 11 trotz unterschiedlicher Wandstärken jeweils etwa einen übereinstimmenden Abstand zwischen der schrägen Fläche 12 und der Außenseite der Wandung 4 überbrücken muß, weil das die schräge Fläche 1 2 aufweisende Teil 2 jeweils vorher schon im wesentlichen an die zu erwartende Wandstärke angepaßt wurde. Dennoch bleibt der Vorteil eines elastischen Anschlagringes 11 erhalten, der Ungenauigkeiten und Dickenunterschiede ausgleichen kann.

In den Figuren 1 bis 3 ist eine Ausführungsform dargestellt, bei welcher das die schräge Fläche 12 aufweisende Teil 2 mittels eines Gewindes durch Verdrehen in axialer Richtung verstellbar und durch die Selbsthemmung dieses Gewindes sowie die Reibung an dem elastischen Ring 11 festlegbar ist. Dabei ist das die schräge Fläche 1 2 aufweisende Teil 2 ein Ring, der über einen Teil seiner axialen Ausdehnung ein Innengewinde 13 hat, welches auf ein Außengewinde 14 an der Anschlußarmatur 1 im Bereich der gegenseitigen Trennfläche paßt. In Fig.1 ist dabei dieses Teil 2 in axialer Richtung in seine obere Endstellung, also die von den Haltevorsprüngen 8 am weitesten entfernte Position verschraubt, während Fig.2 eine Verschraubung in entgegengesetzter Richtung mit entsprechender Verminderung des Abstandes zu den Haltevorsprüngen 8 zeigt. In dieser Position gemäß Fig.2 hat also ein Teil des Innengewindes des ringförmigen Teils 2 das Außengewinde 14 der Anschlußarmatur 1 verlassen.

Im Ausführungsbeispiel gemäß den Figuren 4 und 5 ist das die schräge Fläche 12 aufweisende Teil 2 stufenweise axial verstellbar und mittels einer lösbaren Verriegelung, nämlich mit wenigstens einem in Querlochungen 15 des Teiles 2 und der Anschlußaramtur 1 passenden Querstift 16 festlegbar, der gegebenenfalls auch als Schraube ausgebildet sein kann, um selbst gesichert zu werden. Man erkennt in Fig.4 und 5 in axialer Richtung an der Anschlußarmatur 1 übereinander zwei Querlochungen 15, das heißt in diesem Falle sind zwei Verstellstufen für unterschiedlich dicke Wandungen 4 möglich. Dazwischenliegende Wandstärken können wiederum durch die Elastizität und unterschiedlich starke Verformungen des Ringes 11 sowie eine eventuelle Verschiebung auf der schrägen Fläche 12 ausgeglichen werden.

In beiden Ausführungsbeispielen hat das die schräge Fläche 12 aufweisende Teil 2 einen der schrägen Fläche 12 in axialer Richtung benachbarten, in Gebrauchsstellung von den Haltevorsprüngen 8 weiter als die schräge Fläche 1 2 entfernt angeordneten Ringbereich 17, der im Ausführungsbeispiel nach den Figuren 2 und 3 als Greifring zum Verdrehen ausgebildet ist und von Hand oder gegebenenfalls mit einem Werkzeug erfaßt werden kann, um die Schraubbewegung durchzuführen. Im Ausführungsbeispiel nach den Figuren 4 und 5 sind in diesem Ringbereich 17 die Querlochungen 15 für den Querstift 16 angeordnet.

Da in diesem Ringbereich 17 eine einzige Querlochung 15 ausreicht und die in axialer Richtung benachbarten Querlochungen in der Anschlußarmatur 1 angeordnet sind, kann ein relativ schmaler Ringbereich 17 bereits ausreichen.

In beiden Ausführungsbeispielen erkennt man noch eine im Inneren der Anschlußarmatur 1 angeordnete, ihr in diesem Falle zugehörige Spannzange 18, die mit Hilfe einer Schraubhülse 19 in axialer Richtung angezogen werden kann, um eine Dichtung 20 gegen einen festzulegenden länglichen Körper anzudrücken und diesen selbst im Bereich der Anschlußarmatur festzuklemmen.

Die Anschlußarmatur 1 zum Befestigen von länglichen Körpern an Lochungen oder Durchbrüchen 3, insbesondere einer Wandung 4 eines Gehäuses hat einerseits den Rand 9 dieser Lochung 3 hintergreifende Haltevorsprünge 8 und andererseits einen als elastischen Ring 11 ausgebildeten Anschlag, der in Gebrauchsstellung an dem dem hintergriffenen Rand 9 der Öffnung 3 gegenüberliegenden Öffnungsrand 10 anliegt. Dieser elastische Ring 11 stützt sich dabei auf einer von innen nach außen schräg von der Öffnung 3 weg erweiternden Fläche 12 der Anschlußarmatur 1 ab, so daß er unter elastischer Vergrößerung seines Durchmessers axial bewegbar und verschiebbar ist, um unterschiedliche Wandstärken zu berücksichtigen. Damit noch größere Wandstärkenunterschiede ausgeglichen werden können, ist die Anschlußarmatur 1 benachbart zu dem die schräge Fläche 12 aufweisenden Bereich geteilt und der die schräge Fläche 12 aufweisende separate Teil 2 ist an der Anschlußarmatur 1 in axialer Richtung verstellbar, wodurch der axiale Abstand der schrägen Fläche 12 von den Haltevorsprüngen 8 veränderbar oder vorwählbar und dadurch schon vorher an unterschiedliche Wandstärken zumindest grob anpaßbar ist.

## Patentansprüche

1. Anschlußarmatur (1) zum Befestigen von länglichen Körpern, beispielsweise von Schläuchen, Wellschläuchen, Rohren, Kabeln oder dergleichen, an einer Öffnung (3), insbesondere an einem Durchbruch oder einer Lochung zum Beispiel in einer Wandung (4) eines Gehäuses oder dergleichen, wobei die Anschlußarmatur (1) einen in Einsteckrichtung (Pf1) axial vorstehenden Befestigungsvorsprung (5) aufweist, der durch im wesentlichen in axialer Richtung verlaufende Schlitze (6) in Haltezungen (7) aufgeteilt ist, an deren Außenseite zumindest in Gebrauchsstellung etwa radial nach außen vorstehende Haltevorsprünge (8) angeordnet sind, wobei die Haltezungen (7) beim Einschieben des Befestigungsvorsprunges (5) in die Öffnung (3), den Durchbruch oder dergleichen Lochung hinter dem Rand (9) der Öffnung (3) in die Halteposition gelangen, in welcher sie diesen Rand (9) zumindest teilweise hintergreifen, wobei mit Abstand zu den Haltevorsprüngen (8) wenigstens ein Anschlag angeordnet ist, der in Gebrauchsstellung an dem dem hintergriffenen Rand (9) der Öffnung (3) gegenüberliegenden Öffnungsrand (10) anliegt und der Anschlag ein elastischer oder gummielastischer Ring (11) ist, der auf einer sich von innen nach außen schräg von der Öffnung weg erweiternden Fläche (12) der Anschlußarmatur (1) abgestützt und unter elastischer Vergrößerung seines Durchmessers gegen seine elastische Rückstellkraft auf dieser schrägen Fläche (12) in axialer Richtung bewegbar oder verschiebbar ist, **dadurch gekennzeichnet, daß** die Anschlußarmatur (1) benachbart zu dem die schräge Fläche (12) aufweisenden Bereich und/oder im Bereich des größten Durchmessers der schrägen Fläche (12) geteilt und der die schräge Fläche (12) aufweisende separate Teil (2) an der Anschlußarmatur (1) in axialer Richtung verstellbar und **dadurch** der axiale Abstand der schrägen Fläche (12) von den Haltevorsprüngen (8) veränderbar oder vorwählbar ist.

2. Anschlußarmatur nach Anspruch 1, **dadurch gekennzeichnet, daß** das die schräge Fläche (12) aufweisende Teil (2) mittels eines Gewindes durch Verdrehen in axialer Richtung verstellbar und insbesondere festlegbar ist.

3. Anschlußarmatur nach Anspruch 1 oder 2, **dadurch gekennzeichnet, daß** das die schräge Fläche (12) aufweisende Teil (2) ein Ring ist, der zumindest über einen Teil seiner axialen Ausdehnung ein Innengewinde (13) hat, welches auf ein Außengewinde (14) an der Anschlußarmatur (1) paßt.

4. Anschlußarmatur nach einem der Ansprüche 1 bis 3, **dadurch gekennzeichnet, daß** das die schräge Fläche (12) aufweisende Teil (2) einen der schrägen Fläche (12) in axialer Richtung benachbarten, in Gebrauchsstellung von den Haltevorsprüngen (8) weiter als die schräge Fläche (12) entfernt angeordneten Ringbereich (17) hat, der als Greifring zum Verdrehen ausgebildet und/oder mit Verformungen zum Erfassen von Hand oder gegebenenfalls mittels eines Werkzeuges versehen ist.

5. Anschlußarmatur nach Anspruch 1, **dadurch gekennzeichnet, daß** das die schräge Fläche (12) aufweisende Teil (2) stufenweise axial verstellbar und mittels einer lösbaren Verriegelung, zum Beispiel mit wenigstens einem in Querlochungen (15) des Teiles (2) und der Anschlußarmatur (1) passenden Querstift (16) festlegbar ist.

6. Anschlußarmatur nach Anspruch 1 oder 5, **dadurch gekennzeichnet, daß** an der Anschlußarmatur in axialer Richtung mehrere Querlochungen (15) und an dem Teil (2) eine Querlochung vorgesehen sind.

7. Anschlußarmatur nach einem der Ansprüche 1, 5 oder 6, **dadurch gekennzeichnet, daß** der Querstift (16) als Schraube ausgebildet ist.

8. Anschlußarmatur nach einem der Ansprüche 1 oder 5 bis 7, **dadurch gekennzeichnet, daß** das die schräge Fläche (12) aufweisende Teil (2) einen der schrägen Fläche (12) in axialer Richtung benachbarten, in Gebrauchsstellung von den Haltevorsprüngen (8) weiter als die schräge Fläche (12) entfernt angeordneten Ringbereich (17) hat, an welchem die Querlochung (15) für den Querstift (16) angeordnet ist/sind.

## Claims

1. Connecting fitting (1) for attaching elongate bodies, such as hoses, corrugated hoses, pipes, cables or the like, to an opening (3), particularly a breach or a hole, for example in a wall (4) of a housing or the like, wherein the connecting fitting (1) has a fixing projection (5) protruding axially in the direction of insertion (Pf1), said projection being divided up, by slots (6) extending substantially in the axial direction, into retaining tongues (7) on the outside of which are provided retaining projections (8) protruding radially outwards to some extent, at least in the position of use, wherein, when the fixing projection (5) is pushed into the opening (3), breach or similar hole, the retaining tongues (7) move behind the edge (9) of the opening (3) into the retaining position in which they at least partly engage behind this edge (9), while spaced from the retaining projections (8) there is at least one stop which in the position of use abuts on the edge (10) of the opening opposite the engaged edge (9) of the opening (3) and the stop is an elastic or rubber-elastic ring (11) which is supported on a surface (12) of the connecting fitting (1) that extends in a sloping configuration away from the opening from the inside to the outside and, with elastic enlargement of its diameter, can be moved or pushed in the axial direction over this sloping surface (12) counter to its elastic restoring force, **characterised in that** the connecting fitting (1) is divided up adjacent to rhe region comprising the sloping surface (12) and/or in the region of the greatest diameter of the sloping surface (12) and the separate part (2) that comprises the sloping surface (12) is adjustable in the axial direction on the connecting fitting (1) and in this way the axial spacing of the sloping surface (12) from the retaining projections (8) can be varied or preselected.

2. Connecting fitting according to claim 1, **characterised in that** the part (2) that comprises the sloping surface (12) can be adjusted and particularly secured by means of a thread by rotating it in rhe axial direction.

3. Connecting fitting according to claim 1 or 2, **characterised in that** the part (2) that comprises the sloping surface (12) is a ring which has, over at least part of its axial extent, an internal thread (13) that fits an external thread (14) on the connecting fitting (1).

4. Connecting fitting according to one of claims 1 to 3, **characterised in that** the part (2) that comprises the sloping surface (12) has an annular region (17) axially adjacent to the sloping surface (12) and, in the position of use, more remote from the retaining projections (8) than the sloping surface (12), said annular region being constructed as a gripping ring for rotation and/or being provided with deformations for gripping by hand or optionally by means of a tool.

5. Connecting fitting according to claim 1, **characterised in that** the part (2) that comprises the sloping surface (12) is axially adjustable in stepwise manner and can be secured by means of a releasable catch, for example with at least one transverse pin (16) that fits into transverse holes (15) in the part (2) and the connecting fitting (1).

6. Connecting fitting according to claim 1 or 5, **characterised in that** a plurality of transverse holes (15) are provided on the connecting fitting in the axial direction and one transverse hole is provided on the part (2).

7. Connecting fitting according to one of claims 1, 5 or 6, **characterised in that** the transverse pin (16) is in the form of a screw.

8. Connecting fitting according to one of claims 1 or 5 to 7, **characterised in that** the part (2) that comprises the sloping surface (12) has an annular region (17), axially adjacent to the sloping surface (12) and, in the position of use, more remote from the retaining projections (8) than the sloping surface (12), on which the transverse hole (15) for the transverse pin (16) is or are provided.

## Revendications

1. Garniture de raccordement (1) pour fixer des corps oblongs, par exemple des tuyaux souples, des tuyaux souples ondulés, des tuyaux, des câbles ou analogues, au niveau d'une ouverture (3), notamment d'un passage ou d'un trou par exemple dans une paroi (4) d'un boîtier ou analogues, la garniture de raccordement (1) présentant une saillie de fixation (5) faisant saillie axialement dans la direction d'enfoncement (Pfl), qui est divisée par des fentes (6) s'étendant essentiellement dans la direction axiale en languettes de retenue (7) sur l'extérieur desquelles sont disposées des saillies de retenue (8) faisant saillie radialement vers l'extérieur au moins en position d'utilisation, sachant que, lorsque l'on introduit la saillie de fixation (5) dans l'ouverture (3), dans le passage ou dans un trou similaire, les languettes de retenue (7) viennent se mettre en position de retenue derrière le bord (9) de l'ouverture (3), position dans laquelle elles sont au moins partiellement enclenchées derrière ledit bord (9), au moins une butée étant disposée à distance des saillies de retenue (8), qui, en position d'utilisation, est appliquée contre le bord (10) de l'ouverture opposé au bord (9) de l'ouverture (3) derrière lequel sont enclenchées les languettes de retenue, et la butée étant une bague (11) élastique ou présentant une élasticité caoutchoutique prenant appui sur une surface (12) de la garniture de raccordement (1), qui s'élargit en biais de l'intérieur vers l'extérieur en partant de l'ouverture, et étant mobile ou déplaçable dans la direction axiale sur ladite surface oblique (12) en augmentant élastiquement son diamètre contre sa force de rappel élastique, **caractérisée en ce que** la garniture de raccordement (1) est divisée à proximité de la zone présentant la surface oblique (12) et/ou dans la zone du plus grand diamètre de la surface oblique (12), et **en ce que** la partie divisée (2) présentant la surface oblique (12) peut être déplacée axialement sur la garniture de raccordement (1), permettant ainsi de modifier ou de présélectionner l'éloignement axial de la surface oblique (12) des saillies de retenue (8).

2. Garniture de raccordement selon la revendication 1, **caractérisée en ce que** la partie (2) présentant la surface oblique (12) peut être déplacée dans la direction axiale et notamment immobilisée au moyen d'un filetage, en la faisant tourner.

3. Garniture de raccordement selon la revendication 1 ou 2, **caractérisée en ce que** la partie (2) présentant la surface oblique (12) est une bague qui présente sur au moins une partie de son étendue axiale un taraudage (13) adapté à un filetage extérieur (14) de la garniture de raccordement (1).

4. Garniture de raccordement selon l'une des revendications 1 à 3, **caractérisée en ce que** la partie (2) présentant la surface oblique (12) comporte une zone annulaire (17) adjacente à la surface oblique (12) dans la direction axiale qui, en position d'utilisation, est davantage éloignée des saillies de retenue (8) que la surface oblique (12), laquelle zone est réalisée en tant que bague de préhension pour tourner et/ou est dotée d'un relief permettant de la saisir avec la main ou, le cas échéant, au moyen d'un outil.

5. Garniture de raccordement selon la revendication 1, **caractérisée en ce que** la partie (2) présentant la surface oblique (12) peut être déplacée axialement de façon graduelle et immobilisée au moyen d'un dispositif de verrouillage amovible, par exemple au moyen d'au moins une tige transversale (16) associée à des trous transversaux (15) de la partie (2) et de la garniture de raccordement (1).

6. Garniture de raccordement selon la revendication 1 ou 5, **caractérisée en ce que** plusieurs trous transversaux (15) sont prévus axialement sur la garniture de raccordement et un trou transversal est prévu sur la partie (2).

7. Garniture de raccordement selon l'une des revendications 1, 5 ou 6, **caractérisée en ce que** la tige transversale (16) est réalisée en tant que vis.

8. Garniture de raccordement selon l'une des revendications 1 ou 5 à 7, **caractérisée en ce que** la partie (2) présentant la surface oblique (12) comporte une zone annulaire (17) adjacente à la surface oblique (12) dans la direction axiale, qui, en position d'utilisation, est davantage éloignée des saillies de retenue (8) que la surface oblique (12), et sur laquelle est disposé le trou transversal (15) pour la tige transversale (16).
